# EUROPÄISCHE PATENTANMELDUNG

(11) **EP 1 530 030 A2**
(43) Veröffentlichungstag der Anmeldung: **11.05.2005**
(21) Anmeldenummer: 04023462.7
(22) Anmeldetag: 01.10.2004
(51) Int. Cl.: G01F 1/84

(54) **Vorrichtung und Verfahren zum Betrieb eines Coriolis-Massendurchflussmessers**

(30) Priorität: 31.10.2003 DE 10351310
(71) Anmelder: ABB PATENT GmbH, 68526 Ladenburg (DE)
(72) Erfinder: Lesjak, Ralf, Dipl.-Ing., 37124 Rosdorf (DE); Friedrichs, René, Dipl.-Phys., 68526 Ladenburg (DE); Gebhardt, Jörg, Dr.-Ing., 55130 Mainz (DE); Keller, Steffen, Dr.-Ing., 76133 Karlsruhe (DE); Kassubek, Frank, Dr., 79618 Rheinfelden (DE)
(74) Vertreter: Miller, Toivo

(57) **Zusammenfassung**

Die Erfindung betrifft eine Vorrichtung und ein Verfahren zum Betrieb eines Coriolis-Massendurchflussmessers mit wenigstens einem Messrohr, und ist dadurch gekennzeichnet, dass an das Messrohr wenigstens zwei Wirk-Baugruppen angebracht sind, die jeweils als Erreger (Aktor) und/oder als Messsignalaufnehmer (Sensor) betreibbar sind. Die Wirk-Baugruppen sind als Tauchanker-Geber mit Magnetkern ausgebildet. Jede Wirk-Baugruppe ist entweder als Sensor oder als Aktor oder gleichzeitig als Aktor und als Sensor betrieben. Jede Wirkbaugruppe wird durch einen ihr zugeordneten Schalter zwischen der Betriebsweise als Sensor- und Aktor umgeschaltet.

## Beschreibung

Die Erfindung betrifft eine Vorrichtung und ein Verfahren zum Betrieb eines Coriolis-Massendurchflussmessers, gemäß dem Oberbegriff des Anspruchs 1.

Ein bekanntes Verfahren ist, dass der Durchflussaufnehmer zwei Sensoren für die Erfassung der Messrohrbewegung und einen Aktuator für die mechanische Erregung des Messrohres besitzt.
Des weiteren gibt es noch einen Sensor für die Messrohrtemperaturmessung und manchmal einen Sensor für die Gehäusetemperaturmessung.

In der W098/52000 ist ein Verfahren und eine Einrichtung zur Erkennung und Kompensation von Nullpunkteinflüssen auf Coriolis-Massendurchflussmesser beschrieben, bei der es drei Sensoren gibt für die Erfassung der Messrohrbewegung und einen Aktuator für die mechanische Erregung des Messrohres.

In den bekannten Anordnungen werden die Sensorspulen zur Erfassung der Messrohrbewegung und die Aktuatorspule zur Erzeugung der Kraft für die Messrohrschwingung verwendet. Aufwand und Fehlerwahrscheinlichkeiten im Gerät steigen mit der Anzahl der verwendeten Aktuatoren und Sensoren.

Aufgabe der Erfindung ist es, eine vereinfachte Vorrichtung und ein vereinfachtes Verfahren für ein Coriolis-Massendurchflussmesser zu schaffen.
Die Aufgabe wird hinsichtlich der Vorrichtung gelöst durch die kennzeichnenden Merkmale des Anspruchs 1 und hinsichtlich des Verfahrens durch die kennzeichnenden Merkmale des Anspruchs 9.
Erfindungsgemäß sind also an das Messrohr wenigstens zwei Wirk-Baugruppen angebracht, die jeweils als Erreger (Aktor) und/oder als Messsignalaufnehmer (Sensor) betreibbar sind.
In besonders vorteilhafter Ausführungsform sind die Wirkbaugruppen als Tauchankergeber ausgebildet, mit jeweils einer Spule und einem darin verschieblichen Magnetkern. Ein solcher Tauchanker-Geber funktioniert bekanntermaßen so, dass im Sensorbetrieb eine Verschiebung des Magnetkerns eine Spannung in der Spule induziert, wohingegen im Aktorbetrieb das Anlegen einer Wechselspannung an die Spule den Magnetkern periodisch zu Schwingungen anregt.

Bei der erfindungsgemäßen Anordnung kann jede Spule entweder als Sensor zur Erfassung der Messrohbewegung oder als Aktuator zur Erzeugung der Kraft für die Messrohrschwingung Verwendung finden.
Hierdurch ist es möglich das Messrohr in verschieden Schwingungsmoden zu betreiben.
Des weiteren kann die Spule durch Ausnutzung der Phaseninformation zwischen Spannung und Strom gleichzeitig als Aktuator und Sensor Verwendung finden.

Desweiteren ist eine Redundanz gegeben, sodass das Messgerät auch noch nach Ausfall eines Sensors/Aktuators funktioniert. Der Betreiber kann über eine Warnung über den momentanen Notbetrieb informiert werden, und hat somit die Möglichkeit einen Ersatz oder eine Reparatur vorzubereiten.

Durch die Möglichkeit Strom und Spannung jedes Sensors/Aktuators zu Messen, ist es möglich den Widerstand der Spule zu bestimmen. Somit ist eine Kabelbrucherkennung oder auch Temperaturmessung möglich.
(Der Kupferwiderstand ändert sich in Abhängigkeit von der Temperatur)

Da die Analog-Digital-Wandler synchronisiert sind, ist eine Messung der Zeitverschiebung zwischen Strom und Spannung das Aktuators, aber auch zwischen Aktuator und Sensor möglich.

In einer besonders wichtigen und einfachen Anordnung kann jede einzelne Spule gleichzeitig als Aktuator und Sensor verwendet werden. Dazu wird sowohl die Amplitude als auch die Phase des jeweiligen Spulenstroms gemessen. Aus der Phasenbeziehung und dem Amplitudenverhältnis zwischen der angelegten Aktuatorspannung und dem Spulenstrom lässt sich die durch die Messrohrbewegung induzierte Spannung berechnen. Daraus ergibt sich insbesondere die Phase der Messrohrschwingung.

Durch die beschriebene gleichzeitige Verwendung der Spulen als Aktuator und Sensor kann das Durchflussmessgerät auch mit insgesamt nur zwei Spulen arbeiten.

Eine erste Realisierung könnte sein, bei den bisherigen Geräten (Stand der Technik) einfach die Aktuatoren wegzulassen. Evtl. sind aber auch andere Anordnungen denkbar. Die Position der nunmehr nur noch zwei Spulen kann z.B. sowohl auf die Sensorfunktion als auch auf die Aktorfunktion hin optimiert werden. (Sensoren sollten so weit wie möglich von der Gerätemitte entfernt sein, um eine große Phasenverschiebung zu enthalten. Dagegen übertragen die Aktoren ihre Kraft optimal, wenn sie möglichst nah an der Mitte angebaut sind.)

Evtl. gibt es am Gerät Positionen mit maximal möglicher EMK, also maximal möglicher Auslenkung, die nicht in der Gerätemitte liegen.
Des weiteren ist zu bedenken, dass diese Anordnung besondere Anforderungen an die Spulen- und Magnetformen stellt. So sind in den Geräten beim Stand der Technik i.a. Antriebs- uns Sensor- Linearmotoren von unterschiedlicher Bauart.

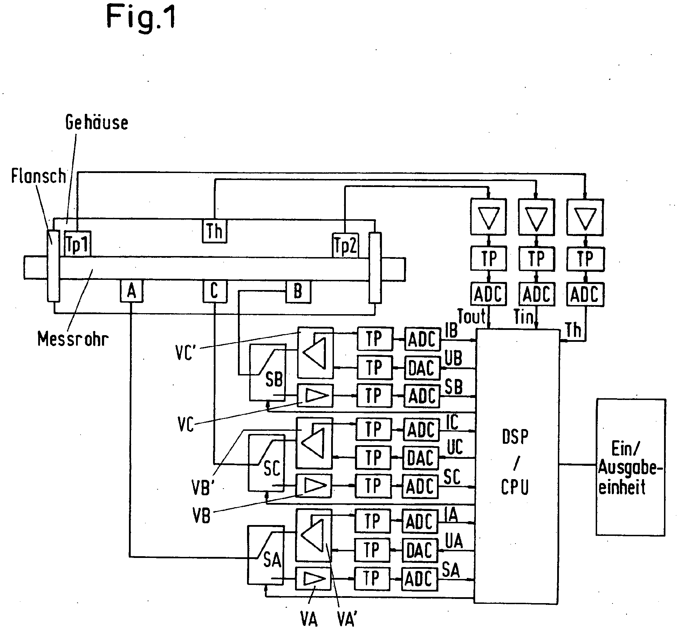

In Figur1 ist eine mögliche Ausführung der Erfindung dargestellt.

A,C,B sind die Sensorspulen, welche aber ebenso als Aktuator benutzt werden können.

Die weiteren in Fig. 1 gezeigten Bauteile sind:
- **DSP/CPU:**: Digitaler Signalprozessor / Central Processing Unit (Mikroprozessor)
- **ADC:**: Analog-Digital-Converter
- **DCA:**: Digital-Analog-Converter
- **TP:**: Tiefpassfilter
- **SA, SB, SC:**: Schalter für Sensor/Aktor A, B, C
- **Tp1, Tp2, Th:**: Temperatursensoren zur Erfassung der Rohrtemperatur (Tp1, Tp2) bzw. der Umgebungstemperatur (Th)
- **VA, VA', VB, VB',** **VC, VC':**: Verstärker
- **SA, SB, SC:**: Sensorsignal von Sensor/Aktoreneinheit A, B, C
- **UA, UB, UC:**: Ansteuerspannung für Sensor/Aktoreneinheit A, B, C
- **IA, IB, IC:**: Strommessgerät von Sensor/Aktoreneinheit A, B; C

Über die durch den DSP gesteuerten Schalter SA, SB und SC erfolgt die Umschaltung zwischen den Betriebsmoden als Sensor oder Aktuator für die jeweilige Sensorspule A, B oder C.

Sensorbetrieb: Im Betrieb als Sensor wird die induzierte Sensorspannung mit Hilfe eines Eingangsverstärkers verstärkt, bandbegrenzt (Anti-Aliasing-Filter) und anschließend einem ADC zugeführt. In dem Beispiel der Fig. 1 wird beispielsweise das Sensorsignal der Spule A über den Schalter SA dem Verstärker VA zugeführt, dort verstärkt, dem Tiefpass TP und nach diesem dem Analog-Digital-Wandler ADC zugeführt, wonach das auf solche Art vorverarbeitete Sensorsignal SA dann dem DSP im digitalen Signalprozessor zugeführt wird zur weiteren Verarbeitung. Analog erfolgt die Signalverarbeitung in den entsprechenden Pfaden für die Spulen C und B.

Im Betrieb als Sensor sind die Schalter SA, SB und SC nicht in der in Fig. 1 gezeigten Schaltposition, sondern entsprechend in der anderen Schaltposition.

### Aktorbetrieb:

Sollen die Sensorspulen A, B, C als Aktor betrieben werden, so werden die Schalter SA, SB und SC in die in der Fig. 1 gezeigte Schaltstellung gebracht, gesteuert von einem Signal aus dem digitalen Signalprozessor DSP, wie angedeutet durch die entsprechende Pfeilverbindung. Von dem digitalen Signalprozessor wird der jeweilige Vorgabewert für die Spulenspannung UA, UB, UC ausgegeben und über einen Digital-Analogwandler DAC wird daraus ein Sinussignal erzeugt, welches mit Hilfe eines nachgeordneten Tiefpasses TP bandbegrenzt und danach über einen entsprechend zugeordneten Leistungsverstärker VA', VB', VC' an die jeweilige Aktorspule A, B oder C angelegt wird.

Gleichzeitig wird der Aktorstrom aus den Verstärkern VA', VB', VC' zurückerfasst, über einen Tiefpass TP zunächst bandbegrenzt und danach über einen Analog-Digital-Wandler ADC digitalisiert und als Strommesswert IA, IB bzw. IC dem digitalen Signalprozessor zur weiteren Auswertung zugeführt.

Die Analog-Digital-Wandler sind dabei synchronisiert, so dass jederzeit die Information über die Phasenbeziehungen zwischen dem jeweiligen Aktorstrom IA, IB bzw. IC und der jeweiligen Aktorspannung UA, UB bzw. UC bekannt ist.

Des weiteren kann noch mindestens eine Messung der Messrohrtemperatur (Tp1, Tp2) sowie eine weitere Messung der Gehäusetemperatur (Th) erfolgen. Die Messwerte der vorgenannten Temperatursensoren werden wie in Fig. 1 oben rechts dargestellt, auch über entsprechende Vorverstärker, Tiefpassfilter und Analog-Digital-Wandler als Temperatursignale dem digitalen Signalprozessor zur weiteren Verarbeitung zugeführt.

Das in dem digitalen Signalprozessor abgelegte Programm bestimmt nun, welche der drei Spulen A, B, C als Aktor und welche als Sensor betrieben werden. So kann beispielsweise die Spule C als Aktor betrieben sein, der Schalter SC wäre dann in der in Fig. 1 angegebenen Position. Die beiden anderen Spulen A, B könnten dann als Sensorspulen betrieben werden, dann wären die entsprechenden Schalter SA und SB in der anderen Schaltstellung.

Es könnte aber auch ein sinnvoller Betriebszustand darin bestehen, die Spule A als Aktor zu betreiben und die Spulen C und B als Sensor. Dann wären der Schalter SA in seiner in Fig. 1 dargestellten Schaltstellung, und die Schalter SB und SC wären jeweils in der anderen Schaltstellung.

Insgesamt ist jedoch bei der Ausführungsform nach Fig. 1 jede Spule nur in einer vorher gewählten Betriebsmode, nämlich entweder als Aktor oder als Sensor betreibbar.

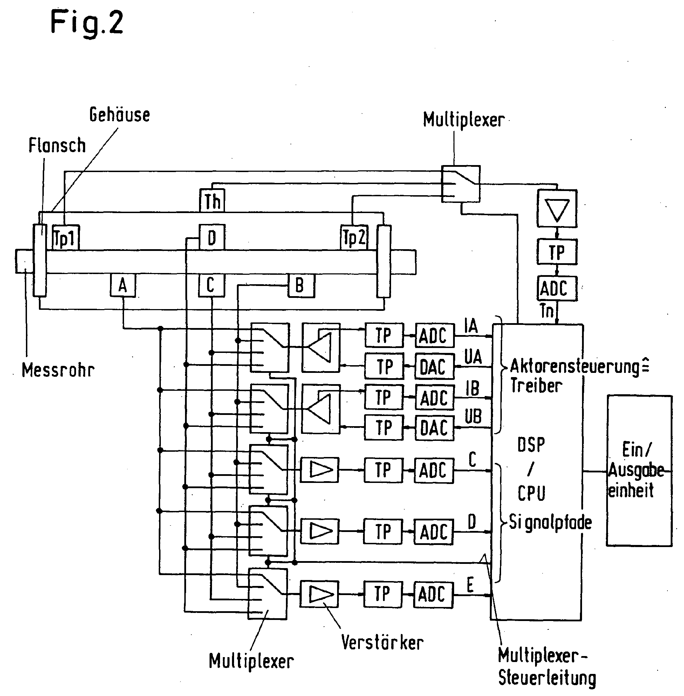

In Fig. 2 ist eine weitere mögliche Ausführung der Erfindungen dargestellt. In der Ausführung nach Fig. 2 ist die Zuordnung des jeweiligen Betriebsmodus für eine der Spulen, ob sie nämlich als Sensor oder als Aktor betrieben wird, wesentlich flexibler handhabbar als in der Ausführungsform nach Fig. 1. Ein weiterer Unterschied besteht darin, dass in der Ausführungsform nach Fig. 2 vier Spulen, nämlich A, B, C, D an dem Messrohr angebracht sind. Die Temperatursensoren Tp1 und Tp2 zur Erfassung der Rohrtemperatur am Rohreingang und am Rohrausgang sowie der Temperatursensor Th zur Erfassung der Gehäusetemperatur sind auch in der Ausführung nach Fig. 2 wieder vorgesehen. Im Unterschied zur Fig. 1 ist jedoch der Signalerfassungspfad - Verstärker,Tiefpass TP, Analog-Digital-Wandler ADC - zur Erfassung der Temperatursignale nur einfach vorhanden, siehe Fig. 2 oben rechts. Ein Multiplexer sorgt dafür, dass, gesteuert von dem digitalen Signalprozessor DSP über eine entsprechende Wirklinie zwischen dem digitalen Signalprozessor und diesem Multiplexer, jeweils reihum die Temperatursignale der drei Temperatursensoren Tp1, Tp2, Th abgefragt werden können. Diese Ausführungsform erspart etliches an Bauteilen , da der Temperatursensor-Signalerfassungs-Pfad nur einfach ausgeführt zu werden braucht.

In der Ausführungsform nach Fig. 2 ist, im Gegensatz zu der Ausführungsform nach Fig. 1 mit der dort dargestellten, relativ festen Zuordnung des Betriebsmodus einer Spule, die Zuordnung der Betriebsmoden der einzelnen Spulen über Multiplexer realisiert. Die Aktoransteuerungstreiber, welche aus den Spannungs-Pfaden - Spannungssignal U, Digital-Analog-Wandler DAC, Tiefpass TP, Verstärker - und den entsprechenden Rückführungen des Stromsignals - über einen weiteren Tiefpass TP, Analog-Digital-Wandlung über einen Analog-Digital-Wandler ADC zum Stromsignal I - bestehen, entsprechen den unter Fig. 1 bereits beschriebenen. In der Ausführungsform nach Fig. 2 sind zwei solche Treiberschaltungen zur Aktoransteuerung vorgesehen, bezeichnet einmal mit UA bzw. IA und mit UB bzw. IB. Über je einen dem Verstärker zugeordneten Multiplexer kann die Aktoransteuerungsspannung nun jeder der vier Spulen A, B, C, D zugeordnet werden. Welcher der jeweiligen Spulen die Aktoransteuerungsspannung zugeordnet wird, entscheidet sich aufgrund des vorgesehenen Programms in dem digitalen Signalprozessor DSP. Die Auswahl und Ansteuerung der Multiplexer geschieht über eine Multiplexersteuerleitung. Auf diese Weise ist eine sehr flexible Auswahl des Betriebsmodus für jede der vier Spulen möglich.

Unterhalb der Aktoransteuerungstreiber sind in der Fig. 2 drei Signalpfade zur Erfassung der Sensorspannung einer Spule dargestellt. Die Signalpfade bestehen, wie oben unter Fig. 1 bereits beschrieben, aus einem Verstärker, einem Tiefpass sowie einem Analog-Digital-Wandler ADC. Zwischen dem Verstärker und den jeweiligen Spulen ist auch hier in der Ausführungsform nach Fig. 2 jeweils ein Multiplexer einem Signalpfad zugeordnet. Auch die Signalpfad-Multiplexer werden über die Multiplexersteuerleitung angesteuert und ausgewählt. Auf diese Weise ist es möglich, sehr flexibel jede der vier Spulen auf jeden der drei Signalpfade aufzuschalten, je nach dem, wie es das in dem digitalen Signalprozessor abgelegte Programm vorsieht. Der Betrieb des Gerätes wird dadurch insgesamt sehr flexibel handhabbar.

Ein weiterer Vorteil der Ausführungsform nach Fig. 2 besteht darin, dass es nunmehr möglich ist, eine Spule gleichzeitig sowohl als Aktor als auch als Sensor zu betreiben. Dies ergibt sich unter Betrachtung der oben ausgeführten Beschreibung.

Es kann nämlich beispielsweise über den Aktoransteuerungspfad UA/IA die Spule A als Aktor angesteuert werden und gleichzeitig über den Signalpfad C das Spulensignal als Sensorsignal erfasst werden, wenn die beiden beteiligten Multiplexer entsprechend geschaltet sind.

Eine mögliche sinnvolle Abfolge der Ansteuerung der vier Spulen A, B, C, D könnte beispielsweise so aussehen, dass die Spule A und B als Aktorspulen betrieben werden, die Spule C und D als Sensorspulen, und kurz danach die Spulen C und D als Aktorspulen und die Spulen A und B als Sensorspulen.

Die in den Ausführungsbeispielen der Figuren 1 und 2 angegebenen elektronischen Baugruppen, wie beispielsweise Verstärker, Multiplexer, Tiefpässe, Analog-Digital-Wandler, Digital-Analog-Wandler sind im übrigen bekannte elektronische Baugruppen und werden je nach dem Stand der Technik mit modernsten Bauelementen hergestellt, sind aber insofern dem Fachmann verfügbar. Das gleiche gilt für den dargestellten digitalen Signalprozessor DSP.

## Patentansprüche

1. Vorrichtung zum Betrieb eines Coriolis-Massendurchflussmessers mit wenigstens einem Messrohr, **dadurch gekennzeichnet, dass** an das Messrohr wenigstens zwei Wirk-Baugruppen angebracht sind, die jeweils als Erreger (Aktor) und/oder als Messsignalaufnehmer (Sensor) betreibbar sind.

2. Vorrichtung nach Anspruch 2, **dadurch gekennzeichnet, dass** die Wirk-Baugruppen als Tauchanker-Geber mit Magnetkern ausgebildet sind.

3. Vorrichtung nach Anspruch 2, **dadurch gekennzeichnet, dass** jede Wirk-Baugruppe entweder als Sensor oder als Aktor betrieben ist.

4. Vorrichtung nach Anspruch 2, **dadurch gekennzeichnet, dass** jede Wirk-Baugruppe gleichzeitig als Aktor und als Sensor betrieben ist.

5. Vorrichtung nach einem der vorigen Ansprüche, **dadurch gekennzeichnet, dass** jede Wirkbaugruppe durcheinen ihr zugeordneten Schalter zwischen der Betriebsweise als Sensor- und Aktor umschaltbar ist.

6. Vorrichtung nach einem der vorigen Ansprüche, **dadurch gekennzeichnet, dass** jeder Wirk-Baugruppe für die Betriebsweise als Sensor wenigstens ein Vorverstärker, ein Tiefpassfilter und ein Analog-Digital-Wandler zugeordnet ist.

7. Vorrichtung nach einem der vorigen Ansprüche, **dadurch gekennzeichnet, dass** jeder Wirk-Baugruppe für die Betriebsweise als Aktor zur Anregung wenigstens ein Digital-Analog-Wandler, eine Spannungssignalgeneratorbaugruppe, ein Tiefpassfilter und ein Leistungsverstärker zugeordnet sind.

8. Vorrichtung nach einem der vorigen Ansprüche, **dadurch gekennzeichnet, dass** die Schalter, ADC und DAC mit einem Mikroprozessor verbunden sind.

9. Verfahren zum Betrieb eines Coriolis-Massendurchflussmessers mit wenigstens einem Messrohr, **dadurch gekennzeichnet, dass** an dem Messrohr wenigstens zwei Wirk-Baugruppen angebracht und jede dieser Wirkbaugruppen als Erreger (Aktor) und/oder als Messsignalaufnehmer (Sensor) betrieben werden.

10. Verfahren nach Anspruch 9, **dadurch gekennzeichnet, dass** die Wirk-Baugruppen als Tauchankergeber betrieben werden.

11. Verfahren nach Anspruch 9 oder 10, **dadurch gekennzeichnet, dass** jede Wirkbaugruppe durch einen von einem Mikroprozessor gesteuerten Schalter zwischen dem Sensor- und Aktor-Betrieb umgeschaltet wird.

12. Verfahren nach Anspruch 11, **dadurch gekennzeichnet, dass** beim Betrieb als Sensor die Signalspannung verstärkt, gefiltert und in einem ADC digitalisiert und einem Mikroprozessor zugeführt wird.

13. Verfahren nach einem der Ansprüche 9 bis 12, **dadurch gekennzeichnet, dass** bei Aktorbetrieb von einem DAC ein Sinussignal erzeugt wird, welches mit Hilfe eines Tiefpasses bandbegrenzt und danach über einen Leistungsverstärker an die Spule der Wirk-Baugruppe angelegt wird.

14. Verfahren nach Anspruch 13, **dadurch gekennzeichnet, dass** der Aktorstrom über einen weiteren ADC gemessen und dem Mikroprozessor zugeführt wird.

15. Verfahren nach einem der Ansprüche 9 bis 14, **dadurch gekennzeichnet, dass** die Rohr und/oder Gehäusetemperatur gemessen wird.

16. Verfahren nach einem der Ansprüche 9 bis 15, **dadurch gekennzeichnet, dass** jede einzelne Wirk-Baugruppe gleichzeitig als Aktor und Sensor betrieben wird.

17. Verfahren nach Anspruch 16, **dadurch gekennzeichnet, dass** sowohl die Amplitude als auch die Phase des jeweiligen Spulenstroms gemessen werden, und aus dem Amplitudenverhältnis zwischen der angelegten Aktorspannung und dem Spulenstrom die durch die Messrohrschwingung induzierte Spannung berechnet wird.

18. Verfahren nach einen der Ansprüche 9 bis 17, **dadurch gekennzeichnet dass** das Verfahren von einem Mikroprozessor gesteuert wird.
